Europäisches Patentamt

European Patent Office

Office européen des brevets

(11) Publication number: **0 055 518**
**B1**

## (12) EUROPEAN PATENT SPECIFICATION

(45) Date of publication of patent specification: **19.02.86**

(51) Int. Cl.⁴: **F 16 K 31/06**

(21) Application number: **81305504.3**

(22) Date of filing: **20.11.81**

(54) **Solenoid valve.**

(30) Priority: **26.12.80 JP 183891/80**
**26.12.80 JP 183892/80**
**26.12.80 JP 186478/80 u**

(43) Date of publication of application:
**07.07.82 Bulletin 82/27**

(45) Publication of the grant of the patent:
**19.02.86 Bulletin 86/08**

(84) Designated Contracting States:
**DE GB**

(56) References cited:
**DE-A-1 500 165**
**DE-A-1 675 537**
**DE-A-2 224 926**
**FR-A-1 186 275**
**US-A-3 079 947**
**US-A-3 502 100**
**US-A-3 680 586**
**US-A-3 874 407**

(73) Proprietor: **Hitachi, Ltd.**
**5-1, Marunouchi 1-chome**
**Chiyoda-ku Tokyo 100 (JP)**

(72) Inventor: **Okamoto, Yoshio**
**Tsukuba House 14-103 2625-3, Shimoinayoshi**
**Chiyodamura Niihari-Gun, Ibaraki-ken (JP)**
Inventor: **Iwai, Kazumi**
**1398-29, Miwa-3-chome**
**Mito-shi (JP)**
Inventor: **Inoue, Hiroshi**
**3602, Shimoinayoshi Chiyodamura**
**Niihari-gun Ibaraki-ken (JP)**
Inventor: **Kunugi, Yoshifumi**
**Tsukuba House 5-204 2625-3, Shimoinayoshi**
**Chiyodamura Niihari-Gun, Ibaraki-ken (JP)**
Inventor: **Shinozaki, Tadashi**
**4576-1, Kamisuna Kandatsumachi**
**Tsuchiura-shi (JP)**

(74) Representative: **Haigh, Charles Roy et al**
**J.A. KEMP & CO. 14 South Square Gray's Inn**
**London WC1R 5EU (GB)**

Courier Press, Leamington Spa, England.

## Description

The present invention relates to a control valve for controlling a flow rate in proportion to an electric input signal, and more particularly to a solenoid valve suitable for the proportional control of air-fuel ratio in a household burner and for controlling the flow of coolant in a refrigerator.

A solenoid valve (or a stop valve) in which the valve is closed by an electromagnetic force to stop the flow of a fluid, has been well known. However, solenoid valves of this kind do not have a function of continuously controlling a flow rate.

Further, another solenoid valve has been known well in which the value of an electric signal (voltage) applied to an electromagnet is varied to change the cross section of a flow path to thereby continuously control a flow rate. In such a solenoid valve, however, an electric hysteresis is generated when a plunger makes a reciprocating motion. In more detail, a relation between the input voltage and the displacement of the plunger is different between the input voltage increasing period and the input voltage decreasing period. That is, it has been confirmed that the amount of displacement of the plunger at the input voltage increasing period is significantly different from that at the input voltage decreasing period by more than 10 percent for the same value of the input voltage. Accordingly, the flow rate of a fluid is also different between the input voltage increasing period and the input voltage decreasing period. In a burner in which proportional control with a constant air-fuel ratio is required, there arises a problem that correcting means or the like has to be additionally provided to the burner.

The above-mentioned electric hysteresis may be eliminated by applying an electric signal in the form of a pulse to the electromagnet.

Accordingly, in order to obtain a solenoid valve in which such an electric hysteresis may be eliminated and a continuous control of flow rate may be attained, it is considered to apply a pulse signal to such a stop valve. In such a structure, however, a valve may so violently collide with a valve seat that there may be produced fatigue. Thus the stop valve may not stand long use. Furthermore, loud noises may be produced when the collision takes place between the valve and the valve seat so that the stop valve may not be put into practical use.

Such application of controlling pulses to an on/off valve is disclosed in U.S.—A—3874407 which describes a solenoid valve provided with a fluid inlet and a fluid outlet and including therein a valve member which is movable in opposite directions so as to open or close one of said fluid inlet and said fluid outlet, movement in one direction being controlled by an electromagnetic force via a plunger engageable therewith, a variable pulse signal being used as an electric signal to be applied to an electromagnet controlling movement of the plunger, whereby in use of the solenoid valve the flow rate through the valve is variable responsive to changes in pulse rate and/or pulse duration. This valve is simply an on/off valve with the solenoid being actuatable either to hold a ball valve closed against fluid pressure or to allow it to open to allow the passage of pressure fluid therethrough. Accordingly there is a continuous violent chatter of the valve member against its seat under the pulsing action of the solenoid with the consequence not only of damage but also of a very limited control of the throughflow rate of fluid.

The present invention, instead of coarsely controlling through-flow by varying the relative length of time which a valve is either fully open or fully closed, uses the application of pulses to vary the relative volume of throughflow with flow through valve being continuous, but to a greater or lesser volume rate of flow, depending upon the application of pulses controlling the position of the valve member.

The present invention is characterised in that the valve member is a piston-like valve member engaged by the electromagnetically controlled plunger slidably received in a cylinder, a clearance being provided between the valve member and the cylinder wall, aperture means extending radially through at least one of said piston-like valve member and said cylinder for communicating the fluid inlet with the fluid outlet in one position of said piston-like valve member, the communication being closed in a second position of the piston-like valve member, the valve member being movable between said first and second positions by said plunger which is movable by electromagnetic force against the bias of a spring. With this arrangement the flow rate through the valve is controlled by varying the pulse rate and/or pulse duration with the valve member being very easily movable with the minimum of interference to such easy and rapid movement due to the clearance between the valve member and the walls of the cylinder within which it is movable. This clearance also helps to provide some room for passage of fluid between either side of the piston-like valve member so that the movement of the valve member is not too greatly resisted by the build-up of fluid pressure in the closed end of the cylinder. However, in a particular embodiment this function is carried out even more thoroughly by the provision of an escape hole providing communication between the space defined by the upper outer surface of the piston and an inner wall of the cylinder and the space defined by the lower outer surface of the piston and the inner wall of the cylinder.

While a somewhat similar piston has been disclosed in, for example, U.S.—A—3502100 this piston valve arrangement instead of being subjected to very rapid movements under the control of electromagnetic forces so as to reduce hysteresis effects is in fact provided with a tight fit in its cylinder deliberately to reduce flutter by providing frictional clamping because of the fact that the valve is relying upon pressure differentials to control throughput rather than being provided with a definite external control. The only positive electromagnetic valve control in this prior construction is by way of a solenoid provided for a complete switching off closing action of the valve.

The present invention will become more apparent from the following description taken in conjunction with the accompanying drawings, in which:

Fig. 1 is a longitudinal sectional view showing a fundamental embodiment of a solenoid valve according to the present invention.

Fig. 2 is a longitudinal sectional view showing a second embodiment of a solenoid valve according to the present invention;

Figs. 3 and 4 show waveforms of pulse signals applied to an electromagnet included in the embodiment shown in Fig. 1, Fig. 3 illustrating a variable-frequency pulse signal, and Fig. 4 illustrating a pulse signal which is variable in the pulse width thereof.

Fig. 5 shows a relation between the displacement of a plunger and the frequency in a solenoid valve according to the present invention;

Fig. 6 is a graph showing a relation between the frequency and the flow rate as the results of experiments made on a solenoid valve according to the present invention;

Fig. 7 is a longitudinal sectional view showing a third embodiment of a solenoid valve according to the present invention;

Fig. 8 is a longitudinal sectional view showing a fourth embodiment of a solenoid valve according to the present invention; and

Fig. 9 is a sectional view taken along the line IX—IX in Fig. 8.

The present invention will be explained below with reference to the drawings.

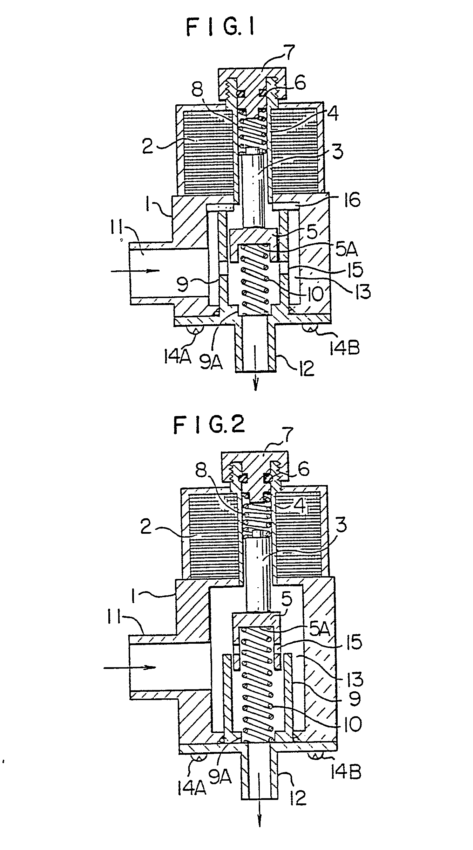

Fig. 1 shows a first embodiment of a solenoid valve according to the present invention, which is a fundamental embodiment of the invention and is used to control a gas flow.

In Fig. 1, a solenoid valve body 1 is formed with a gas chamber 13 and a gas inlet 11 communicating with the gas chamber 13. There is provided an electromagnetic coil 2 in the solenoid valve body 1. A plunger 3 is reciprocally movably disposed in a plunger case 4 of a non-magnetic material provided along the longitudinal axis of the coil 2. The plunger 3 is engaged at its lower end with a piston valve 5 having a cup-shaped cross section. The engagement may be made by integral formation or more preferably by simple abutting contact therebetween with no connecting means. A magnetic head 7 is threaded onto the plunger case 4 with a ring 6 provided therebetween. A spring 8 is interposed between the magnetic head 7 and the upper surface of the plunger 3.

Another spring 10 is interposed between a lower depressed portion 5A of the piston valve 5 and the lower stepped portion 9A of a cylinder 9 which will be explained later. The piston valve 5 integrated with the plunger 3 is standing stationary in a balanced condition by means of repulsive forces of the springs 8 and 10.

The cylinder 9 is provided with a gas outlet 12, and arranged in the gas chamber 13 such that the piston valve 5 fits the inside of the cylinder 9. A flange portion of the cylinder 9 is fastened to the solenoid valve body 1 with attaching bolts 14A and 14B. The cylinder 9 is provided substantially at its longitudinally central part with one or more apertures 15 for causing the gas inlet 11 to communicate with the gas outlet 12 selectively as required. The upper end of the cylinder 9 is connected to a portion of the solenoid valve body 1 through a seal material 16 to prevent the gas within the cylinder 9 from escaping into the gas chamber 13. A gap is provided between the piston valve 5 and the cylinder 9 to prevent the piston valve 5 from being put in mechanical contact with the inner wall of the cylinder 9. The dimension of the gap is selected to fall within a range from 0.02 to 0.10 mm, taking into consideration the amount of gas escaping through the gap.

While being provided in the cylinder 9 in the above-mentioned first embodiment, at least one aperture 15 may be provided in the piston valve 5 in the case where the cylinder 9 is short, as shown in Fig. 2 as a second embodiment of the present invention. The structural features of the soleniod valve of this embodiment shown in Fig. 2 are the same as those of the first embodiment shown in Fig. 1 except for the above-mentioned point, and therefore further explanation of the second embodiment is omitted.

Next, the function of the solenoid valves shown in Figs. 1 and 2 will be explained on the basis of the first embodiment shown in Fig. 1.

In the thus arranged solenoid valve, in operation, pulse signals are applied to the electromagnetic coil 2 to generate an electromagnetic force. As a result, the piston valve 5 moves up and down repeatedly to provide a balanced condition between the generated electromagnetic force and the forces of the springs 8 and 10, so that the gas communicating aperture 15 is made open and closed repeatedly to thereby continuously control the flow rate of the gas outlet 12.

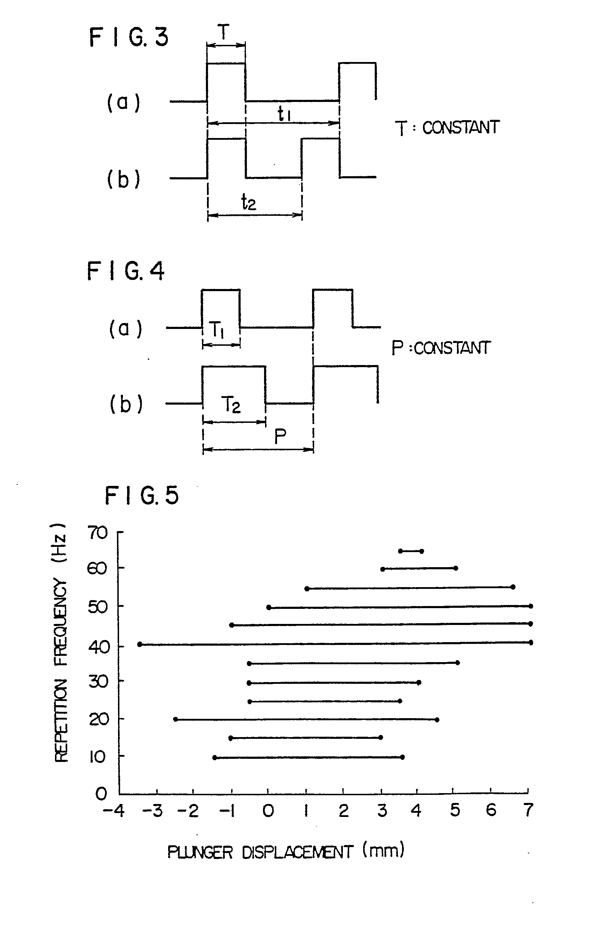

The above-mentioned pulse signal may have such a waveform as shown in Fig. 3. Namely, the repetition period (i.e. repetition frequency) of the pulse is varied, for example to be $t_1$ as shown in Fig. 3 (a) or to be $t_2$ as shown in Fig. 3 (b) while the pulse width T of the pulse for causing the aperture 15 to be opened (or alternatively to be closed) is kept fixed as seen in Fig. 3 (a) and Fig. 3 (b). Alternatively, the pulse signal may have such a waveform, as shown in Fig. 4, that the pulse width of the pulse for causing the aperture 15 to be opened (or alternatively to be closed) is varied, for example to be $T_1$ as shown in Fig. 4 (a) or to be $T_2$ as shown in Fig. 4 (b), while the repetition period P (i.e. frequency) of the pulse is kept fixed as seen in Fig. 4 (a) and (b).

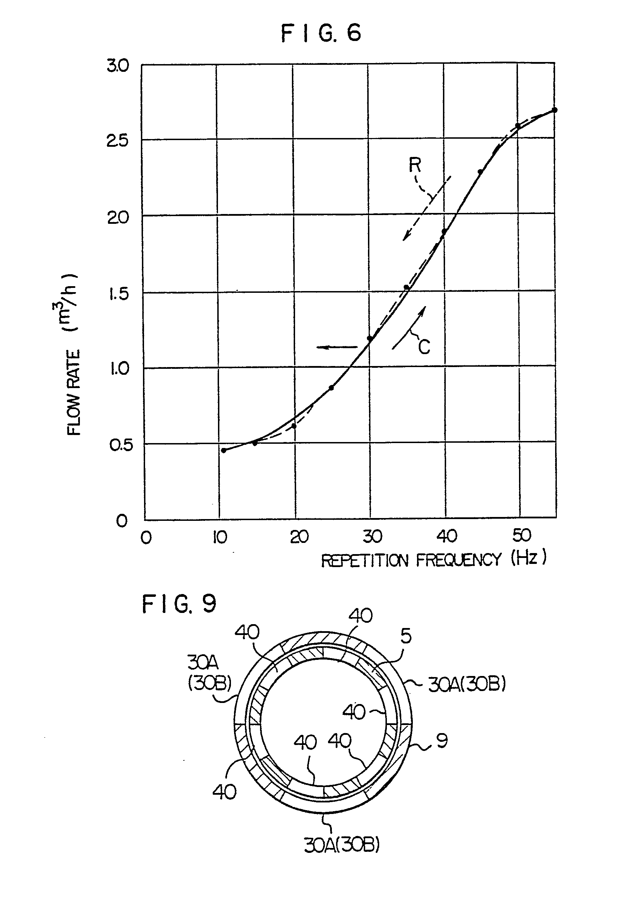

Fig. 5 shows a relation between the frequency of the pulse signal applied to the electromagnetic coil 2 and the displacement of the plunger 3. The dimension of the aperture 15 provided in the cylinder 9 is determined by the ranges of displacement shown in Fig. 5. The values in Fig. 5 were obtained by experiments in which the spring load was selected to be 185 g and pulses each having pulse width T of 8 msec were applied to the electromagnetic coil 2.

In the solenoid valve according to the embodiments of the present invention, the piston valve 5 moves up and down to make the aperture 15 open and closed, so that the flow rate of gas may be controlled continuously in accordance with the pulse signal, without being affected by the electric hysteresis, so as to obtain a desired flow rate, and furthermore, such a loud sound which is caused by the collision between the valve and the valve seat as occurred in the conventional solenoid may be eliminated with high reliability.

In the above-mentioned explanation, either of the pulse signal of variable frequency (Fig. 3) or the pulse signal of variable pulse width (Fig. 4) has been applied to the electromagnetic coil 2. However, it is also possible to continuously change the flow rate of gas by employing a combination of the above-mentioned pulse signals so as to obtain a desired flow rate. In this case, the flow rate may be controlled in a wider range to obtain a greater value of flow rate, without making the solenoid valve large in size, while somewhat complicated control is required.

Fig. 6 shows the results of a performance test which was made on a solenoid valve according to the embodiments of the present invention using the air as the fluid. As is apparent from Fig. 6, the flow rate varies continuously in accordance with the frequency of the pulse signal, and there is no significant difference between the flow at the frequency increasing period C and that at the frequency decreasing period R with respect to the same frequency, so that a desired flow rate can be obtained with high accuracy.

Next, description will be made on other embodiments of the solenoid valve according to the present invention.

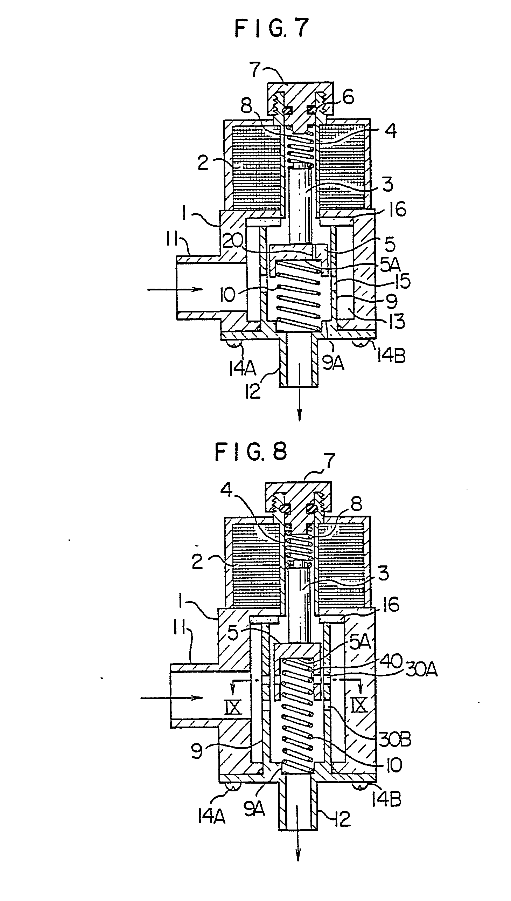

Fig. 7 shows a third embodiment of the present invention which is an improved version of the fundamental embodiment shown in Fig. 1, and in which the displacement of the piston valve can be made greater.

In the embodiment shown in Fig. 1, gas flowing into the cylinder is compressed due to the vertical motion of the piston valve 5 and therefore the valve 5 is pushed back by a strong force applied to the lower surface 5A of the valve 5.

By the way, the flow rate Q obtained by a solenoid valve according to the embodiment of the present invention is expressed by the following equation:

$$Q = \frac{T_o \cdot f}{1000} \cdot C \cdot A \cdot \sqrt{\Delta P}$$

where To represents the open period of the gas communicating aperture, $f$ the frequency of the applied pulse signal, C the flow coefficient, A the area of opening of the gas communicating aperture, and $\Delta P$ the pressure loss.

As is apparent from the above equation, a maximum value of flow rate in solenoid valves having the same size is determined by the opening area A of the gas communicating aperture in the case where the pressure loss $\Delta P$ is kept constant. The opening area A is determined depending on the displacement of the piston valve 5, as mentioned previously.

That is, in the case where the diameter of the cylinder is fixed, the flow rate may be increased as the displacement of the piston valve 5 is greater.

In the third embodiment shown in Fig. 7, an escape hole 20 is provided in the piston valve 5 to eliminate a restoring force which pushes back the piston valve 5. A substantially hermetically sealed space defined by the inner wall of the cylinder 9 and the outer wall of the piston valve 5 communicates with a space defined by the depressed portion 5A of the piston valve 5 and the inner wall of the cylinder 9, through the escape hole 20. The third embodiment shown in Fig. 7 is the same as the embodiment shown in Fig. 1 except that the escape hole 20 is provided.

According to the third embodiment, when the piston valve 5 moves up in the cylinder 9, the gas which has flowed into the space defined by the inner wall of the cylinder 9 and the outer wall of the piston valve 5, is forced out quickly through the escape hole 20.

Accordingly, the gas which has flowed into the above-mentioned space does not affect the operation of the solenoid valve, and the displacement of the piston valve 5 may be greatly increased as compared with the embodiment shown in Fig. 1. Accordingly, when the respective embodiments shown in Figs. 1 and 7 are made equal in size, the latter can produce a far larger flow rate as compared with the former.

Fig. 8 shows a fourth embodiment of the solenoid valve according to the present invention which is another improved version of the fundamental embodiment shown in Fig. 1, and which can make wide the range of flow rate without making the soleniod valve large in size.

In the fourth embodiment, two gas communicating apertures 30A and 30B are provided in the cylinder 9, and the piston valve 5 is provided with a gas communicating aperture 40 which communicates with the apertures 30A and 30B at need.

In the fourth embodiment, for example, the gas which has passed through the aperture 30A is allowed to pass through the aperture 40 or stopped by the outer side wall of the piston valve 5, and the gas which has passed through the aperture 30B is allowed to advance over the undermost end surface of the piston valve 5 or stopped by the outer side surface of the piston valve 5. Accordingly, the quantity of gas flow may be simply increased, and may be controlled in a wide range without making the valve itself larger in size.

In the thus arranged solenoid valve as shown in Fig. 8, a positional shift may occur between the aperture 40 of the piston valve 5 and the apertures 30A and 30B of the cylinder 9, in assembling the solenoid valve, or due to weak vibrations or resonance generated in operating the solenoid valve. The above-mentioned positional shift makes it impossible to obtain a desired opening area of the apertures 30A and 30B.

Fig. 9 shows an arrangement wherein the above-mentioned problem is solved. Referring to Fig. 9, a ratio of the number of the apertures 30A (or 30B) circumferentially equidistantly formed in the cylinder 9 to the number of the apertures 40 circumferentially equidistantly formed in the piston valve 5, is selected to be 1:2. That is, appropriate correlation is provided between the apertures 30A (or 30B) provided in the cylinder 9 and the apertures 40 provided in the piston valve 5, so that the total opening area of the apertures 30A (or 30B) may have a predetermined value independently of the circumferential position of the piston valve 5 when the valve 5 is stopped.

As mentioned above, in the embodiment shown in Fig. 9, since the total opening area of the apertures provided in the cylinder may have a predetermined value independently of the cicumferential position of the valve 5 when the valve 5 is stopped, the flow rate is kept constant even if weak vibrations or resonance takes place in operating the solenoid valve.

**Claims**

1. A solenoid valve provided with a fluid inlet (11) and a fluid outlet (12) and including therein a valve member (5) which is movable in opposite directions so as to open or close one of said fluid inlet and said fluid outlet, movement in one direction being controlled by application of an electromagnetic force via a plunger (3) engageable therewith, a variable pulse signal being used as an electric signal to be applied to an electromagnet (2) of the solenoid controlling movement of the plunger whereby in use of the solenoid valve the flow rate through the valve is variable responsive to changes in the pulse rate and/or pulse duration, characterised in that the valve member is· a piston-like valve member (5) engaged by the electromagnetically controlled plunger (3) and slidably received within a cylinder (9), a clearance being provided between the valve member and the cylinder wall, aperture means (15, 30A, 30B, 40) extending radially through at least one of said piston-like valve member (5) and said cylinder (9) for communicating the fluid inlet with the fluid outlet in one position of the piston-like valve member (5), the communication being closed in a second position of the piston-like member, the valve member (5) being movable between said first and second positions by said plunger which is movable by the electromagnetic force against the bias of a spring (8).

2. A solenoid valve according to Claim 1, characterised in that said aperture means is provided in said cylinder.

3. A solenoid valve according to Claim 1, characterised in that said spring (8) is interposed between an upper part of said plunger and a magnetic head (7) mounted on a plunger casing (4), and another spring (10) is interposed between a lower part of said piston-like valve member (5) and the body (1) of the solenoid valve.

4. A solenoid valve according to any preceding Claim, characterised in that the clearance gap between said piston-like valve member (5) and said inner wall of the cylinder (9) is selcted to be a value within a range of 0.02 to 0.10 mm.

5. A solenoid valve according to any preceding Claim, characterised in that said pulse signal has a frequency within a range of 10 to 50 Hz.

6. A solenoid valve according to any preceding Claim, characterised in that said piston-like valve member (5) has a cup-shaped cross-section.

7. A solenoid valve according to Claim 6, characterised in that said piston-like valve member (5) is provided with an escape hole (20) to provide communication between a space defined by an upper outer surface of said piston-like valve member (5) and an inner wall of said cylinder (9) and a space defined by a lower outer surface of said piston-like valve member (5) and the inner wall of said cylinder (9).

8. A solenoid valve according to any preceding Claim, characterised in that said aperture means includes a plurality of apertures (30A, 30B) axially spaced in the wall of said cylinder (9) and an aperture (40) provided in said piston-like valve member (5) for communicating with one of said apertures (30A, 30B) at need.

9. A solenoid valve according to any one of Claims 1 to 7, characterised in that said aperture means includes a plurality of apertures (30A, 30B) circumferentially provided in said cylinder and a plurality of apertures (40) circumferentially provided in said piston-like valve member (5) for communicating with said apertures (30A, 30B) provided in said cylinder.

**Revendications**

1. Electrovanne comportant une admission (11) pour le fluide et une sortie (12) pour le fluide et incluant un élément de vanne (5) qui est déplaçable dans des directions opposées de manière à ouvrir ou à fermer soit ladite admission du fluide, soit ladite sortie du fluide, le déplacement dans une direction étant commandé par l'application d'une force électromagnétique par l'intermédiaire d'un poussoir (3) pouvant être amené à contacter l'élément de vanne, un signal impulsionnel variable étant utilisé en tant que signal électrique devant être appliqué à un électroaimant (2) du solénoïde commandant le déplacement du poussoir, ce qui a pour effet que, lors de l'utilisation de l'électrovanne, le débit traversant la vanne est variable en réponse à des modifications de la fréquence des impulsions et/ou de la durée des impulsions, caractérisée en ce que l'élément de vanne est un élément de vanne (5) en forme de piston, que contacte le poussoir (3) commandé par voie électromagnétique, et qui est logé de manière à pouvoir glisser à l'intérieur d'un cylindre (9), un jeu étant prévu entre l'élément de vanne et la paroi cylindrique, des moyens en forme d'ouvertures (15, 30A, 30B, 40) s'étendant radialement à travers au moins l'un desdits organes formés par ledit élément de vanne (5) en forme de piston et ledit cylindre (9) de manière à metre en communication l'admission du fluide avec la sortie du fluide lorsque l'élément de vanne (5) en forme de piston est dans une position, tandis que la communication est bloquée lorsque l'élément en forme de piston est dans une seconde position, l'élément de vanne (5) étant déplaçable entre ladite première et ladite seconde positions sous l'action dudit poussoir qui est déplaçable sous l'action de la force électromagnétique à l'encontre de la sollicitation d'un ressort (8).

2. Electrovanne selon la revendication 1, caractérisée en ce que lesdits moyens en forme d'ouvertures sont prévus dans ledit cylindre.

3. Electrovanne selon la revendication 1, caractérisée en ce que ledit ressort (8) est interposé entre une partie supérieure dudit poussoir et une tête magnétique (7) montée dans un carter (4) du poussoir, et qu'un autre ressort (10) est interposé entre une partie inférieure dudit élément de vanne en forme de piston (5) et du corps (1) de l'électrovanne.

4. Electrovanne selon l'une quelconque des revendications précédentes, caractérisée en ce que le jeu présent entre l'élément de vanne en forme de piston (5) et ladite paroi intérieure du cylindre (9) est choisie égale à une valeur supérieure ou égale comprise entre 0,02 et 0,2 mm.

5. Electrovanne selon l'une quelconque des revendications précédentes, caractérisée en ce que ledit cylindre impulsionnel possède une fréquence allant dans la gamme de 10 à 50 Hz.

6. Electrovanne selon l'une quelconque des revendications précédentes, caractérisée en ce que ledit élément de vanne en forme de piston (5) possède une section en coupe transversale en forme de pot.

7. Electrovanne selon la revendication 6, caractérisée en ce que ledit élément de vanne en forme de piston (5) est muni d'un trou d'évacuation (20) servant à établir une communication entre un espace défini par une surface extérieure supérieure dudit élément en forme de piston (5) et une paroi intérieure dudit cylindre (9), et un espace défini par une surface extérieure dudit élément de vanne en forme de piston (5) et la paroi intérieure dudit cylindre (9).

8. Electrovanne selon l'une quelconque des revendications précédentes, caractérisée en ce que lesdits moyens en forme d'ouvertures comprennent une pluralité d'ouvertures (30A, 30B) espacées axialement dans la paroi dudit cylindre (9) et une ouverture (4o) ménagée dans ledit élément de vanne de forme de piston (5) de manière à communiquer au besoin avec l'une desdites ouvertures (30A, 30B).

9. Electrovanne selon l'une quelconque des revendications 1 à 7, caractérisée en ce que lesdits moyens en forme d'ouvertures comprennent une pluralité d'ouvertures (30A, 30B) réparties circonférentiellement dans ledit cylindre et une pluralité d'ouvertures (40) prévues circonférentiellement dans ledit élément de vanne en forme de piston (5) afin de communiquer avec lesdites ouvertures (30A, 30B) ménagées dans ledit cylindre.

**Patentansprüche**

1. Magnetventil, das mit einem Fluideinlaß (11) und einem Fluidauslaß (12) versehen ist und ein zum Öffnen oder Schließen jeweils des Fluideinlasses bzw. Fluidauslasses in entgegengesetzten Richtungen bewegbares Ventilglied (5) enthält, wobei die Bewegung in einer Richtung durch Anwendung einer elektromagnetischen Kraft über einen damit beaufschlagbaren Stößel (3) gesteuert ist, indem als elektrisches Signal zur Zuführung an einen Elektromagnet (2) des die Bewegung des Stößels steuernden Solenoids ein variables Impulssignal dient, wodurch im Betrieb des Magnetventils der Durchsatz durch das Ventil in Abhängigkeit von Änderungen in der Impulsfrequenz und/oder Impulsdauer veränderbar ist, dadurch gekennzeichnet, daß das Ventilglied ein von dem elektromagnetisch gesteuerten Stößel (3) beaufschlagtes und in einem Zylinder (9) gleitend angeordnetes kolbenartiges Ventilglied (5) ist, daß zwischen dem Ventilglied und der Zylinderwand ein Spielraum vorgesehen ist, daß in radialer Richtung durch das kolbenartige Ventilglied (5) und/oder den Zylinder (9) eine Öffnungsanordnung (15, 30A, 30B, 40) verläuft, um in einer Stellung des kolbenartigen Ventilgliedes (5) den Fluideinlaß mit dem Fluidauslaß zu verbinden, wobei die Verbindung in einer zweiten Stellung des kolbenartigen Gliedes geschlossen ist, und daß das Ventilglied (5) durch den von der elektromagnetischen Kraft gegen die Vorspannung einer Feder (8) bewegbaren Stößel zwischen der ersten und der zweiten Stellung bewegbar ist.

2. Magnetventil nach Anspruch 1, dadurch gekennzeichnet, daß die Öffnungsanordnung in dem Zylinder vorgesehen ist.

3. Magnetventil nach Anspruch 1, dadurch gekennzeichnet, daß die Feder (8) zwischen einem oberen Teil des Stößels und einem an einem Stößelgehäuse (4) angebrachtem magnetischen Kopf (7) und eine weitere Feder (10) zwischen einem unteren Teil des kolbenartigen Ventilgliedes (5) und dem Körper (1) des Magnetventils angeordnet ist.

4. Magnetventil nach einem der vorhergehenden Ansprüche dadurch gekennzeichnet, daß der Spielraum-Abstand zwischen dem kolbenartigen Ventilglied (5) und der Innenwand des Zylinders (9) mit einem Wert im Bereich von 0,02 bis 0,10 mm gewählt ist.

5. Magnetventil nach einem der vorhergehenden Ansprüche, dadurch gekennzeichnet, daß das Impulssignal eine Frequenz im Bereich von 10 bis 50 Hz hat.

6. Magnetventil nach einem der vorhergehenden Ansprüche, dadurch gekennzeichnet, daß das kolbenartige Ventilglied (5) einen becherförmigen Querschnitt aufweist.

7. Magnetventil nach Anspruch 6, dadurch gekennzeichnet, daß das kolbenartige Ventilglied (5) mit einem Ausströmloch (20) versehen ist, um eine Verbindung zwischen einem von einer oberen Außenfläche des kolbenartigen Ventilgliedes (5) und einer Innenwand des Zylinders (9) definierten Raum und einem von einer unteren Außenwand des kolbenartigen Ventilgliedes (5) und der Innenwand des Zylinders (9) definierten Raum zu bilden.

8. Magnetventil nach einem der vorhergehenden Ansprüche, dadurch gekennzeichnet, daß die Öffnungsanordnung mehrere in der Wand des Zylinders (9) in axialem Abstand angeordnete Öffnungen (30A, 30B) und eine in dem kolbenartigen Ventilglied (5) vorgesehene Öffnung (40), die je nach Bedarf mit einer der Öffnungen (30A, 30B) in Verbindung steht, umfaßt.

9. Magnetventil nach einem der Ansprüche 1 bis 7, dadurch gekennzeichnet, daß die Öffnungsanordnung mehrere in Umfangsrichtung im Zylinder vorgesehene Öffnungen (30A, 30B) und mehrere in Umfangsrichtung in dem kolbenartigen Ventilglied (5) angeordnete Öffnungen (40), die mit den im Zylinder vorgesehenen Öffnungen (30A, 30B) in Verbindung stehen, umfaßt.

F I G. 1

F I G.2

0 055 518

FIG.3

(a)

(b)

T : CONSTANT

FIG.4

(a)

(b)

P :CONSTANT

FIG.5

PLUNGER DISPLACEMENT (mm)

REPETITION FREQUENCY (Hz)

2

## F I G. 6

## F I G. 9

F I G. 7

F I G. 8